# EUROPEAN PATENT SPECIFICATION

(11) **EP 3 745 360 B1**
(45) Date of publication and mention of the grant of the patent: **01.12.2021**
(21) Application number: 19176796.1
(22) Date of filing: 27.05.2019
(51) Int. Cl.: G07C 5/00, G08B 13/24

(54) **IDENTIFICATION OF SAFETY EQUIPMENT IN A VEHICLE**
IDENTIFIZIERUNG EINER SICHERHEITSAUSRÜSTUNG IN EINEM FAHRZEUG
IDENTIFICATION D'ÉQUIPEMENT DE SÉCURITÉ DANS UN VÉHICULE

(43) Date of publication of application: 02.12.2020
(73) Proprietor: Ningbo Geely Automobile Research & Development Co. Ltd., Hangzhou Bay New District Ningbo 315336 (CN)
(72) Inventor: NILSSON, Magnus, 448 37 FLODA (SE); LINDBERG NILSSON, Erik, 417 47 GÖTEBORG (SE)
(74) Representative: Zacco Sweden AB

(56) References cited:
- EP-A1- 2 624 221
- EP-A2- 1 467 305
- FR-A1- 3 067 146
- US-A1- 2015 193 729

## Description

### TECHNICAL FIELD

The present disclosure relates generally to the field of safety equipment. More particularly, it relates to identification of safety equipment in a vehicle.

### BACKGROUND

It is known for vehicles to comprise safety equipment such as warning triangle, high visibility vest, flares, safety cones, blankets etc.

Safety equipment is necessary to be present in a vehicle and in condition to be used in case of an emergency e.g. a vehicle break-down.

As safety equipment may be forgotten due to human error or due to safety equipment requirements differing between different areas i.e. a certain area may require additional safety equipment than others e.g. in a certain area, in addition to a warning triangle, a high visibility vest must be present in the vehicle, it may lead to the safety equipment in the vehicle being incomplete and/or not meeting the safety equipment requirements.

A drawback of current safety equipment systems is that safety equipment may be forgotten and/or not recovered and/or not supplemented especially in situations where the vehicle user is unfamiliar with the vehicle and/or the location. e.g. for rental cars, which may lead to the vehicle user driving the vehicle without meeting the safety equipment requirements and in worse case pose a security risk due to possibly missing safety equipment in the vehicle. Therefore, there is a need for alternative approaches to identification of safety equipment in a vehicle. An example of the state of the art of an electronic kit to be localised in a vehicle can be found in FR 3 067 146 A1.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to identification of safety equipment in a vehicle.

According to a first aspect, this is achieved by a method for analysing at least one safety equipment in a vehicle, wherein each one of the safety equipment comprises an identification device.

The method comprises receiving a signal with information associated to the identification device at pre-determined events, and determining if the at least one safety equipment complies with set safety requirements in response to the received signal.

The method further comprises informing a vehicle occupant when there is a non-compliance with the set safety requirements.

An advantage of some embodiments is that alternative approaches to identification of safety equipment in a vehicle are provided.

Another advantage of some embodiments is that the method for analysing at least one safety equipment in a vehicle enables the vehicle userto be assured and informed of the presence and condition of the safety equipment in the vehicle.

In some embodiments, the identification device comprises a Radio Frequency Identification, RFID, device.

An advantage of some embodiments is the RFID device may be embedded in the safety equipment for automatic identification and data capture.

In some embodiments, the method further comprises determining presence and condition of the detected safety equipment in response to the received signal.

An advantage of some embodiments is that the determined presence and condition of the detected safety equipment enables the vehicle user to be informed if the safety equipment requirements are met are not.

In some embodiments, the signal comprises information about the type of safety equipment present in the vehicle.

An advantage of some embodiments is that the type of safety equipment provides the vehicle user with further information about the safety equipment present in the vehicle which may be useful in an emergency situation e.g. a vehicle breakdown.

In some embodiments, the signal further comprises information about the date of manufacture of the safety equipment present in the vehicle.

An advantage of some embodiments is that the date of manufacture of the safety equipment provides the vehicle user with information about the age of the safety equipment present in the vehicle which may be useful in order to know if any of the safety equipment are outdated and not functioning as intended.

In some embodiments, the information of non-compliance comprises information about a missing type of safety equipment and/or if the age of the security equipment has exceeded a threshold value.

An advantage of some embodiments is that the missing type of safety equipment and/or the age of the safety equipment provides the vehicle user with information regarding non-compliance which may be useful in order to take actions to correct the non-compliance.

According to the invention, the method further comprises determining location of the vehicle, and setting, in response to the determined location, the safety requirements to be complied with. An advantage of some embodiments is that the vehicle user is alleviated of the task of himself obtaining information about the safety requirements for a specific area and instead this is done automatically as the location of the vehicle is determined and the corresponding safety requirements to be complied with are set accordingly.

In some embodiments, the method further comprises determining time of year, and setting, in response to the determined time of year, the safety requirements to be complied with.

An advantage of some embodiments is that the vehicle user is alleviated of the task of himself obtaining information about the safety requirements for a specific time of the year and instead this is done automatically as the time of the year is determined and the corresponding safety requirements to be complied with are set accordingly.

In some embodiments, the pre-determined events in the vehicle comprises any of at each start of the vehicle, after driving a certain distance, after driving a certain time, and when entering a new country.

An advantage of some embodiments is that the vehicle user is kept informed regularly of the safety equipment in the vehicle and when changes in set safety requirements occur.

In some embodiments, the method further comprises providing points of interest wherein safety equipment is available for purchase or upgrade.

An advantage of some embodiments is that the vehicle user may take actions to correct any non-compliance with set safety requirements by purchasing new safety equipment or upgrading current safety equipment.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an arrangement for analysing at least one safety equipment in a vehicle, wherein each one of the safety equipment comprises an identification device.

The arrangement comprises a memory comprising executable instructions, one or more processors configured to communicate with the memory wherein the one or more processors are configured to cause the arrangement to receive a signal with information associated to the identification device at pre-determined events, and determine if the at least one safety equipment complies with set safety requirements in response to the received signal.

The one or more processors are further configured to cause the arrangement to inform a vehicle occupant when there is a non-compliance with the set safety requirements.

An advantage of some embodiments is that alternative approaches to identification of safety equipment in a vehicle are provided.

Another advantage of some embodiments is that the arrangement for analysing at least one safety equipment in a vehicle enables the vehicle user to be assured and informed of the presence and condition of the safety equipment in the vehicle.

In some embodiments, the one or more processors are configured to further cause the arrangement to determine presence and condition of the detected safety equipment in response to the received signal.

An advantage of some embodiments is that the determined presence and condition of the detected safety equipment enables the vehicle user to be informed if the safety equipment requirements are met are not.

In some embodiments, the one or more processors are configured to further cause the arrangement to determine location of the vehicle, and set, in response to the determined location, the safety requirements to be complied with.

An advantage of some embodiments is that the vehicle user is alleviated of the task of himself obtaining information about the safety requirements for a specific area and instead this is done automatically as the location of the vehicle is determined and the corresponding safety requirements to be complied with are set accordingly.

In some embodiments, the one or more processors are configured to further cause the arrangement to determine time of year, and set, in response to the determined time of year, the safety requirements to be complied with.

An advantage of some embodiments is that the vehicle user is alleviated of the task of himself obtaining information about the safety requirements for a specific time of the year and instead this is done automatically as the time of the year is determined and the corresponding safety requirements to be complied with are set accordingly.

In some embodiments, the one or more processors are configured to further cause the arrangement to provide points of interest wherein safety equipment is available for purchase or upgrade.

An advantage of some embodiments is that the vehicle user may take actions to correct any non-compliance with set safety requirements by purchasing new safety equipment or upgrading current safety equipment.

A fourth aspect is a vehicle comprising the arrangement according to the third aspect.

A fifth aspect is a system for analysing at least one safety equipment in a vehicle. wherein each one of the safety equipment comprises an identification device.

The system comprises a receiving module configured to receive a signal with information associated to the identification device at pre-determined events, and a determining module configured to determine if the at least one safety equipment complies with set safety requirements in response to the received signal.

The system further comprises an informing module configured to inform a vehicle occupant when there is a non-compliance with the set safety requirements.

An advantage of some embodiments is that alternative approaches to identification of safety equipment in a vehicle are provided.

Another advantage of some embodiments is that the system for analysing at least one safety equipment in a vehicle enables the vehicle userto be assured and informed of the presence and condition of the safety equipment in the vehicle.

In some embodiments, the system further comprises a determining module configured to determine presence and condition of the detected safety equipment in response to the received signal.

An advantage of some embodiments is that the determined presence and condition of the detected safety equipment enables the vehicle user to be informed if the safety equipment requirements are met are not.

In some embodiments, the system further comprises a determining module configured to determine location of the vehicle, and a setting module configured to set, in response to the determined location, the safety requirements to be complied with.

An advantage of some embodiments is that the vehicle user is alleviated of the task of himself obtaining information about the safety requirements for a specific area and instead this is done automatically as the location of the vehicle is determined and the corresponding safety requirements to be complied with are set accordingly.

In some embodiments, the system further comprises a determining module configured to determine time of year, and a setting module configured to set, in response to the determined time of year, the safety requirements to be complied with.

An advantage of some embodiments is that the vehicle user is alleviated of the task of himself obtaining information about the safety requirements for a specific time of the year and instead this is done automatically as the time of the year is determined and the corresponding safety requirements to be complied with are set accordingly.

In some embodiments, the system further comprises a providing module configured to provide points of interest wherein safety equipment is available for purchase or upgrade.

An advantage of some embodiments is that the vehicle user may take actions to correct any non-compliance with set safety requirements by purchasing new safety equipment or upgrading current safety equipment.

Any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is flowchart illustrating example method steps according to some embodiments;
Figure 2 is a schematic overview illustrating an example system according to some embodiments;
Figure 3 is a schematic block diagram illustrating an example arrangement according to some embodiments; and
Figure 4 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to identification of safety equipment in a vehicle are provided.

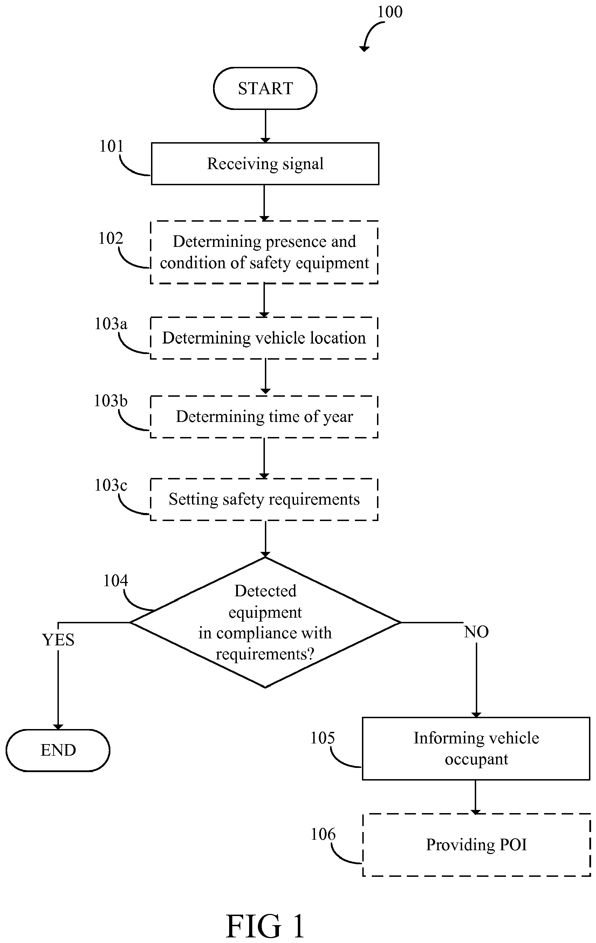

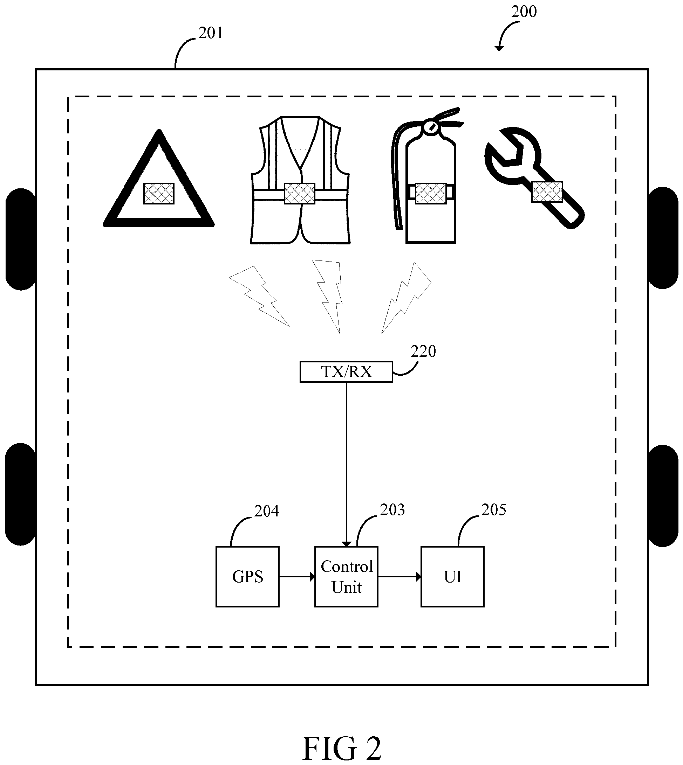

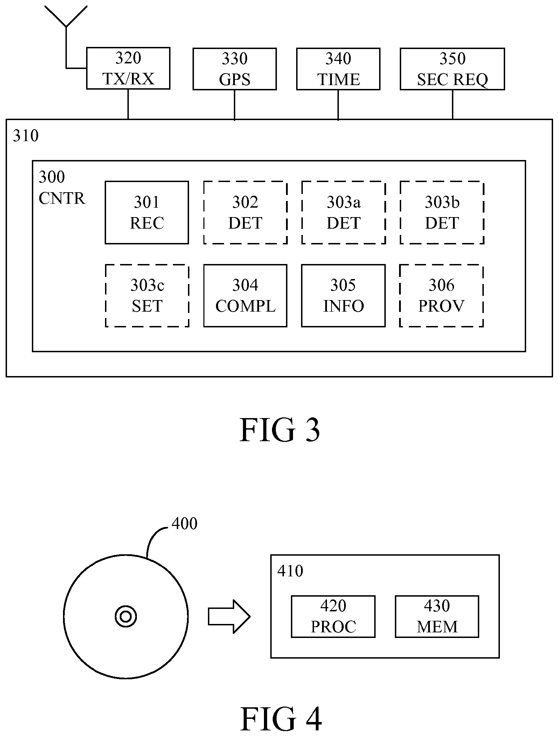

A vehicle may comprise a non-autonomous vehicle, a semi-autonomous vehicle, an autonomous vehicle, or any other type of vehicle capable of performing the method steps as described in Figure 1, and/or suitable to comprise a system as described in Figure 2 and/or an arrangement as described in Figure 3 and/or a computer program product as described in Figure 4.

Safety equipment may comprise equipment such as warning triangle, high visibility vest, flares or flash lights, safety cones, blankets, tools, fire extinguisher, spare fuel, food, or any other safety equipment which may be useful or necessary in emergency situations e.g. in a vehicle breakdown, an accident etc.

Safety requirements may comprise requirements regarding safety equipment required, i.e. required either by law or by practice or by prediction e.g. a prediction may be based on what types of safety equipment most vehicles in the area typically have, to be present in the vehicle.

Figure 1 is a flowchart illustrating example method steps according to some embodiments. The method 100 is for analysing at least one safety equipment in a vehicle. Thus, the method 100 may, for example, be performed by a system 200 of Figure 2 and/or an arrangement 300 of Figure 3 and/or a computer program 410 of Figure 4.

The method 100 is for analysing at least one safety equipment in a vehicle, wherein each one of the safety equipment comprises an identification device.

In step 101, a signal with information associated to the identification device is received at pre-determined events.

In some embodiments, the identification device comprises a Radio Frequency Identification, RFID, device.

Other identification devices comprising a transceiver chip e.g. a passive transceiver chip may also be used accordingly.

In some embodiments, the pre-determined events comprise any of at each start of the vehicle, after driving a certain distance, after driving a certain time, and when entering a new country.

Other pre-determined events occurring at different times or locations may also be used accordingly.

In step 102, in some embodiments, presence and condition of the detected safety equipment is determined in response to the received signal.

In some embodiments, the signal comprises information about the type of safety equipment present in the vehicle.

For example, the signal may comprise information that a certain type of tool e.g. a jack and/or a lug wrench is present in the vehicle. Furthermore, the signal may comprise information that a spare wheel is present in the vehicle.

In some embodiments, the signal further comprises information about the date of manufacture of the safety equipment present in the vehicle.

For example, if a safety equipment such as a fire extinguisher has a date of manufacture which indicates that the fire extinguisher is more than 10 years old it may be considered to be outdated and then the outdated fire extinguisher should be replaced with a new.

Additionally or alternatively, safety equipment such as spare fuel, flares or flash lights, or food may each have a date of manufacture of which indicates the age of the safety equipment. If the date of manufacture for a safety equipment indicates that the safety equipment is more than a set age threshold for the type of safety equipment it may be considered to be outdated and subject for replacement. Hence, different types of safety equipment may comprise different set age thresholds for considering the type of safety equipment to be outdated.

In step 103a, in some embodiments, location of the vehicle is determined.

The location of the vehicle is relevant in order to set the correct security requirements for the certain area i.e. a geographically limited area e.g. a city, a region, a state, a country etc. in which the vehicle is located in.

For example, if the certain area in which the vehicle is located in is determined to be Sweden then the security requirements may comprise a requirement to always have a warning triangle in the vehicle.

In step 103b, in some embodiments, time of year is determined.

The current time of the year, i.e. winter or summer, is relevant in order to set the correct security requirements for the typical weather of the time of the year.

For example, if the current time of year is determined to be winter then the security requirements may comprise a requirement to always have a snow shovel in the vehicle.

In step 103c, in some embodiments, the safety requirements to be complied with are set in response to the determined location and/or the determined time of the year.

For example, if the current location is determined to be Sweden and the current time of year is determined to be winter then the set security requirements may comprise having a warning triangle and a snow shovel in the vehicle.

In step 104, the at least one safety equipment is determined if it complies with set safety requirements in response to the received signal.

For example, the safety equipment present in the vehicle is compared with the set safety requirements comprising, e.g. a list of equipment, in order to determine if the present safety equipment in the vehicle complies with the list of equipment of the set safety requirements.

In step 105, a vehicle occupant is informed when there is a non-compliance with the set safety requirements.

In some embodiments, the information of non-compliance comprises information about a missing type of safety equipment and/or if the age of the security equipment has exceeded a threshold value.

In step 106, points of interest are provided wherein safety equipment is available for purchase or upgrade.

For example, a point of interest may comprise a purchase location or service location wherein either safety equipment may be purchased or upgraded/repaired e.g. a service point.

Figure 2 is a schematic overview illustrating an example system according to some embodiments. The system 200 is for analysing at least one safety equipment in a vehicle. Thus, the system 200 may, for example, perform the methods steps of the method 100 of Figure 1 and/or comprise an arrangement 300 of Figure 3 and/or a computer program 410 of Figure 4.

The system 200 comprises an arrangement for analysing at least one safety equipment in a vehicle, wherein each one of the safety equipment comprises an identification device.

The arrangement comprises a memory comprising executable instructions, one or more processors configured to communicate with the memory wherein the one or more processors are configured to cause the arrangement to receive a signal with information associated to the identification device at pre-determined events, determine if the at least one safety equipment complies with set safety requirements in response to the received signal, and inform a vehicle occupant when there is a non-compliance with the set safety requirements.

In some embodiments, the one or more processors are configured to further cause the arrangement to determine presence and condition of the detected safety equipment in response to the received signal which enables the vehicle user to be informed if the safety equipment requirements are met are not.

In some embodiments, the one or more processors are configured to further cause the arrangement to determine location of the vehicle, and set, in response to the determined location, the safety requirements to be complied with which alleviates the vehicle user of the task of obtaining information about the safety requirements for a specific area and instead this is done automatically as the location of the vehicle is determined and the corresponding safety requirements to be complied with are set accordingly.

For example, when the location of the vehicle is determined to be Sweden then the set safety requirements may comprise a warning triangle to be present in the vehicle of which warning triangle is determined to be present or not in the vehicle and thereby complying or not complying with the set safety requirements.

In some embodiments, the one or more processors are configured to further cause the arrangement to determine time of year, and set, in response to the determined time of year, the safety requirements to be complied with which alleviates the vehicle user of the task of obtaining information about the safety requirements for a specific time of the year and instead this is done automatically as the time of the year is determined and the corresponding safety requirements to be complied with are set accordingly.

For example, when the time of year is determined to be winter then the set safety requirements may comprise a snow shovel to be present in the vehicle of which snow shovel is determined to be present or not in the vehicle and thereby complying or not complying with the set safety requirements.

In some embodiments, the one or more processors are configured to further cause the arrangement to provide points of interest wherein safety equipment is available for purchase or upgrade.

For example, a service point wherein warning triangles and/or snow shovels are sold may be provided i.e. suggested to the vehicle user via a user interface or via a navigation system in the vehicle so that the vehicle user may take actions to correct any non-compliance with set safety requirements.

In addition, a service point may also be provided to the vehicle user accordingly if the safety equipment is determined to be outdated and service points wherein a replacement or an upgrade may be performed is suggested to the vehicle user but a lower urgency level than if the safety equipment was missing in the vehicle.

The system 200 comprising the arrangement for analysing at least one safety equipment in a vehicle may be further comprised in the vehicle 201.

The vehicle 201 may comprise a set of safety equipment e.g. a warning triangle, a high visibility vest, a fire extinguisher, and tools for emergency situations wherein each piece of safety equipment comprises an identification device e.g. an embedded RFID device for automatic identification and data capture.

The system 200 may also comprise a transceiving unit 220 mounted in the vehicle compartment where the safety equipment is normally stored.

The system 200 may at pre-determined events e.g. at each start of the vehicle, send a signal from the transceiving unit 220 to each of the identification devices embedded in the safety equipment requesting information regarding the type of safety equipment and optionally the date of manufacture of the safety equipment.

The transceiving unit 220 receives a signal, in response to the request, comprising information regarding the present safety equipment in the vehicle and optionally the date of manufacture of the safety equipment from respective identification device.

The identification devices and the transceiving unit 220 are configured to communicate over any wireless signalling or short range communication technologies such as RFID, Bluetooth, Wi-Fi, or Near Field Communication (NFC) etc.

The transceiving unit 220 further communicates via signaling in the system 200 the information received from the identification devices to a control unit 203 in the system 200.

The control unit 203 determines based on the received information from the transceiving unit 220 and possibly from a Global Positioning System (GPS) unit 204 if the present safety equipment in the vehicle 201 complies with the set safety requirements or not.

The control unit further communicates via signaling in the system 200 the determination of compliance or non-compliance and the details thereof to a user interface (Ul) unit 205 for display to a vehicle user.

Figure 3 is a schematic block diagram illustrating an example arrangement according to some embodiments. The example arrangement is an arrangement 300 for analysing at least one safety equipment in a vehicle, wherein the arrangement is configured to be associated with GPS arrangement GPS 330, e.g. GPS circuitry, configured to determine a location of the vehicle, a time arrangement TIME 340, e.g. time circuitry, configured to determine a time of the year, a security requirement arrangement SEC REQ 350, e.g. security requirement circuitry, configured to obtain and provide security requirements for a location and/or a time of year, and a transmitting/receiving arrangement TX/RX 320 e.g. transceiver circuitry, configured to transmit and receive radio signals in a vehicle.

The arrangement 300 is for analysing at least one safety equipment in a vehicle, wherein each one of the safety equipment comprises an identification device.

The arrangement 300 comprises at least one transceiver for receiving radio signals from embedded identification devices in security equipment present in the vehicle.

The arrangement 300 comprises a receiving module REC 301, e.g. receiving circuitry, configured to receive a signal with information associated to the identification device at pre-determined events, and a determining module COMPL 304, e.g. determining circuitry, configured to determine if the at least one safety equipment complies with set safety requirements in response to the received signal.

The arrangement 300 further comprises an informing module INFO 305, e.g. informing circuitry, configured to inform a vehicle occupant when there is a non-compliance with the set safety requirements.

In some embodiments, the arrangement further comprises a determining module DET 302, e.g. determining circuitry, configured to determine presence and condition of the detected safety equipment in response to the received signal.

In some embodiments, the arrangement 300 further comprises a determining module DET 303a, e.g. determining circuitry, configured to determine location of the vehicle.

In some embodiments, the arrangement 300 further comprises a determining module DET 303b, e.g. determining circuitry, configured to determine time of year.

In some embodiments, the arrangement 300 further comprises a setting module SET 303c, e.g. determining circuitry, configured to set the safety requirements to be complied with in response to the determined location and/or the determined time of the year.

In some embodiments, the arrangement 300 further comprises a provisioning module PROV 306, e.g. provisioning circuitry, configured to provision points of interest wherein safety equipment is available for purchase or upgrade.

The arrangement 300 may be comprised in the system 200 described in connection with Figure 2 and/or the arrangement 300 may be configured to perform method steps of any of the methods described in connection with Figure 1 or otherwise described herein.

Figure 4 is a schematic drawing illustrating an example computer readable medium according to some embodiments. The computer program product comprises a non-transitory computer readable medium 400 having thereon a computer program 410 comprising program instructions, wherein the computer program being loadable into a data processing unit and configured to cause execution of the method steps of any of the methods described in connection with Figure 1 or otherwise described herein.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 4 illustrates an example computer readable medium in the form of a compact disc (CD) ROM 400. The computer readable medium has stored thereon a computer program comprising program instructions. The computer program is loadable into a data processor (PROC) 420, which may, for example, be comprised in a vehicle 410. When loaded into the data processing unit, the computer program may be stored in a memory (MEM) 430 associated with or comprised in the data-processing unit. According to some embodiments, the computer program may, when loaded into and run by the data processing unit, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Hence, it should be understood that the details of the described embodiments are merely examples brought forward for illustrative purposes, and that all variations that fall within the scope of the claims are intended to be embraced therein.

## Claims

1. A method for analysing at least one safety equipment in a vehicle, wherein each one of the safety equipment comprises an identification device, the method comprising the following steps:
receiving (101) a signal with information associated to the identification device at pre-determined events,
determining (103a) location of the vehicle,
setting (103c), in response to the determined location, the safety requirements to be complied with,
determining (104) if the at least one safety equipment complies with set safety requirements in response to the received signal, and
informing (105) a vehicle occupant when there is a non-compliance with the set safety requirements.

2. The method according to claim 1, wherein the identification device comprises a Radio Frequency Identification, RFID, device.

3. The method according to any of claims 1-2, further comprising the step of:
determining (102) presence and condition of the detected safety equipment in response to the received signal.

4. The method according to any of claims 1-3, wherein the signal comprises information about the type of safety equipment present in the vehicle.

5. The method according to any of claims 1-4, wherein the signal further comprises information about the date of manufacture of the safety equipment present in the vehicle.

6. The method according to any of claims 1-5, wherein the information of non-compliance comprises information about a missing type of safety equipment and/or if the age of the security equipment has exceeded a threshold value.

7. The method according to any of claim 1-6, further comprising the steps of:
determining (103b) time of year, and
setting (103c), in response to the determined time of year, the safety requirements to be complied with.

8. The method according to any of claims 1-7, wherein the pre-determined events in the vehicle comprises any of at each start of the vehicle, after driving a certain distance, after driving a certain time, and when entering a new country.

9. The method according to any of claim 1-8, further comprising the step of:
providing (106) points of interest wherein safety equipment is available for purchase or upgrade.

10. A computer program product comprising a non-transitory computer readable medium, having thereon a computer program comprising program instructions, the computer program being loadable into a data processing unit and configured to cause execution of the method according to any of claims 1 through 9 when the computer program is run by the data processing unit.

11. An arrangement for analysing at least one safety equipment in a vehicle, wherein each one of the safety equipment comprises an identification device, the arrangement comprising:
a memory comprising executable instructions, one or more processors configured to communicate with the memory wherein the one or more processors are configured to cause the arrangement to:
receive a signal with information associated to the identification device at pre-determined events,
determine location of the vehicle,
set, in response to the determined location, the safety requirements to be complied with,
determine if the at least one safety equipment complies with set safety requirements in response to the received signal, and
inform a vehicle occupant when there is a non-compliance with the set safety requirements.

12. A vehicle (301) comprising the arrangement according to claim 11.

13. A system for analysing at least one safety equipment in a vehicle. wherein each one of the safety equipment comprises an identification device, the system comprising:
a receiving module (301) configured to receive a signal with information associated to the identification device at pre-determined events,
a determining module (303a) configured to determine location of the vehicle,
a setting module (303c) configured to set the safety requirements to be complied with in response to the determined location,
a determining module (304) configured to determine if the at least one safety equipment complies with set safety requirements in response to the received signal, and
an informing module (305) configured to inform a vehicle occupant when there is a non-compliance with the set safety requirements.

14. The system according to claim 13, wherein the system further comprises:
a determining module (302) configured to determine presence and condition of the detected safety equipment in response to the received signal.

## Patentansprüche

1. Verfahren zum Analysieren mindestens einer Sicherheitsausrüstung in einem Fahrzeug, wobei jede der Sicherheitsausrüstung eine Identifikationsvorrichtung umfasst, wobei das Verfahren die folgenden Schritte umfasst:
Empfangen (101) eines Signals mit Informationen, die mit der Identifikationsvorrichtung bei vorgegebenen Ereignissen verknüpft sind,
Bestimmen (103a) des Standorts des Fahrzeugs,
Setzen (103c), als Reaktion auf den bestimmten Standort, der zu erfüllenden Sicherheitsanforderungen,
Bestimmen (104), ob die mindestens eine Sicherheitsausrüstung vorgegebene Sicherheitsanforderungen als Reaktion auf das empfangene Signal erfüllt, und
Informieren (105) eines Fahrzeugnutzers über das Vorhandensein einer Inkompatibilität mit den vorgegebenen Sicherheitsanforderungen.

2. Verfahren nach Anspruch 1, wobei die Identifikationsvorrichtung eine Funkfrequenzidentifikationsvorrichtung, RFID, Radio Frequency Identification, RFID, umfasst.

3. Verfahren nach einem der Ansprüche 1-2, weiter umfassend den Schritt des:
Bestimmens (102) des Vorhandenseins und des Zustands der erfassten Sicherheitsausrüstung als Reaktion auf das empfangene Signal.

4. Verfahren nach einem der Ansprüche 1-3, wobei das Signal Informationen über den in dem Fahrzeug vorhandenen Typ von Sicherheitsausrüstung umfasst.

5. Verfahren nach einem der Ansprüche 1-4, wobei das Signal weiter Informationen über das Herstellungsdatum der in dem Fahrzeug vorhandenen Sicherheitsausrüstung umfasst.

6. Verfahren nach einem der Ansprüche 1-5, wobei die Informationen über Inkompatibilität Informationen über einen fehlenden Typ von Sicherheitsausrüstung und/oder darüber, ob der Alter der Sicherheitsausrüstung einen Schwellenwert überschritten hat, umfassen.

7. Verfahren nach einem der Ansprüche 1-6, ferner umfassend die folgenden Schritte:
Bestimmen (103b) der Jahreszeit, und
Setzen (103c), als Reaktion auf die bestimmte Jahreszeit, der zu erfüllenden Sicherheitsanforderungen.

8. Verfahren nach einem der Ansprüche 1-7, wobei die vorgegebenen Ereignisse in dem Fahrzeug eines von Folgenden umfassen: Bei jedem Starten des Fahrzeugs, nach Zurücklegen einer bestimmten Strecke, nach Fahren für eine bestimmte Zeit, und beim Einfahren in ein neues Land.

9. Verfahren nach einem der Ansprüche 1-8, weiter umfassend den Schritt des:
Bereitstellens (106) von Interessenpunkten, wobei Sicherheitsausrüstung für Kaufen oder Aktualisieren zugänglich ist.

10. Computerprogrammprodukt umfassend ein nicht flüchtiges computerlesbares Medium, das darauf ein Computerprogramm aufweist, umfassend Programmanweisungen, wobei das Computerprogramm in eine Datenverarbeitungseinheit ladbar ist und ausgelegt ist, um die Ausführung des Verfahrens nach einem der Ansprüche 1 bis 9 zu veranlassen, wenn das Computerprogramm von der Datenverarbeitungseinheit ausgeführt wird.

11. Vorrichtung zum Analysieren mindestens einer Sicherheitsausrüstung in einem Fahrzeug, wobei jede der Sicherheitsausrüstung eine Identifikationsvorrichtung umfasst, wobei die Vorrichtung umfasst:
einen Speicher umfassend ausführbare Anweisungen, einen oder mehrere Prozessoren, die ausgelegt sind, um mit dem Speicher zu kommunizieren, wobei der eine oder die mehreren Prozessoren ausgelegt ist bzw. sind, um die Vorrichtung zum Folgenden zu veranlassen:
Empfangen eines Signals mit Informationen, die mit der Identifikationsvorrichtung bei vorgegebenen Ereignissen verknüpft sind,
Bestimmen des Standorts des Fahrzeugs,
Setzen, als Reaktion auf den bestimmten Standort, der zu erfüllenden Sicherheitsanforderungen,
Bestimmen, ob die mindestens eine Sicherheitsausrüstung als Reaktion auf das empfangene Signal vorgegebene Sicherheitsanforderungen erfüllt, und
Informieren eines Fahrzeugnutzers über das Vorhandensein einer Inkompatibilität mit den vorgegebenen Sicherheitsanforderungen.

12. Fahrzeug (301) umfassend die Vorrichtung nach Anspruch 11.

13. System zum Analysieren mindestens einer Sicherheitsausrüstung in einem Fahrzeug, wobei jede der Sicherheitsausrüstung eine Identifikationsvorrichtung umfasst, wobei das System umfasst:
ein Empfangsmodul (301), das zum Empfangen eines Signals mit Informationen, die mit der Identifikationsvorrichtung bei vorgegebenen Ereignissen verknüpft sind, ausgelegt ist,
ein Bestimmungsmodul (303a), das zum Bestimmen eines Standorts des Fahrzeugs ausgelegt ist,
ein Setzmodul (303c), das zum Setzen der als Reaktion auf den bestimmten Standort zu erfüllenden Sicherheitsanforderungen ausgelegt ist,
ein Bestimmungsmodul (304), das zum Bestimmen, ob die mindestens eine Sicherheitsausrüstung als Reaktion auf das empfangene Signal vorgegebene Sicherheitsanforderungen erfüllt, ausgelegt ist, und
ein Informierungsmodul (305), das zum Informieren eines Fahrzeugnutzers über das Vorhandensein einer Inkompatibilität mit den vorgegebenen Sicherheitsanforderungen ausgelegt ist.

14. System nach Anspruch 13, wobei das System ferner Folgendes umfasst:
ein Bestimmungsmodul (302), das zum Bestimmen des Vorhandenseins und des Zustands der erfassten Sicherheitsausrüstung als Reaktion auf das empfangene Signal ausgelegt ist.

## Revendications

1. Procédé d'analyse d'au moins un équipement de sécurité dans un véhicule, dans lequel chacun des équipements de sécurité comprend un dispositif d'identification, le procédé comprenant les étapes consistant à :
recevoir (101) un signal avec des informations associées au dispositif d'identification lors d'événements prédéterminés,
déterminer (103a) l'emplacement du véhicule,
régler (103c), en réponse à l'emplacement déterminé, les exigences de sécurité exigences de sécurité à respecter,
déterminer (104) si l'au moins un équipement de sécurité respecte les exigences de sécurité établies en réponse au signal reçu, et
informer (105) un occupant du véhicule en cas de non-respect des exigences de sécurité définies.

2. Procédé selon la revendication 1, dans lequel le dispositif d'identification comprend un dispositif d'identification par radiofréquence, RFID.

3. Procédé selon l'une quelconque des revendications 1 à 2, comprenant en outre l'étape consistant à :
déterminer (102) la présence et l'état de l'équipement de sécurité détecté en réponse au signal reçu.

4. Procédé selon l'une quelconque des revendications 1 à 3, dans lequel le signal comprend des informations sur le type d'équipement de sécurité présent dans le véhicule.

5. Procédé selon l'une quelconque des revendications 1 à 4, dans lequel le signal comprend en outre des informations sur la date de fabrication de l'équipement de sécurité présent dans le véhicule.

6. Procédé selon l'une quelconque des revendications 1 à 5, dans lequel les informations de non-conformité comprennent des informations sur un type d'équipement de sécurité manquant et / ou si l'âge de l'équipement de sécurité a dépassé une valeur seuil.

7. Procédé selon l'une quelconque des revendications 1 à 6, comprenant en outre les étapes consistant à :
déterminer (103b) la période de l'année, et
régler (103c), en réponse à la période de l'année déterminée, les exigences de sécurité à respecter.

8. Procédé selon l'une quelconque des revendications 1 à 7, dans lequel les événements prédéterminés dans le véhicule comprennent l'un quelconque à chaque démarrage du véhicule, après avoir parcouru une certaine distance, après avoir conduit un certain temps, et lors de l'entrée dans un nouveau pays.

9. Procédé selon l'une quelconque des revendications 1 à 8, comprenant en outre l'étape consistant à :
fournir (106) des points d'intérêt dans lesquels l'équipement de sécurité est disponible pour achat ou mise à niveau.

10. Produit de programme informatique comprenant un support non transitoire et lisible par ordinateur, ayant dessus un programme informatique comprenant des instructions de programme, le programme informatique pouvant être chargé dans une unité de traitement de donnés et configuré pour amener l'exécution du procédé selon l'une quelconque des revendications 1 à 9 quand le programme informatique est exécuté par l'unité de traitement de donnés.

11. Agencement pour analyser au moins un équipement de sécurité dans un véhicule, dans lequel chacun des équipements de sécurité comprend un dispositif d'identification, l'agencement comprenant :
une mémoire comprenant des instructions exécutables, un ou plusieurs processeurs configurés pour communiquer avec la mémoire, dans lequel l'un ou
plusieurs les processeurs sont configurés pour amener l'arrangement à :
recevoir un signal avec des informations associées au dispositif d'identification lors d'événements prédéterminés,
déterminer l'emplacement du véhicule,
régler, en réponse à l'emplacement déterminé, les exigences de sécurité exigences de sécurité à respecter,
déterminer si l'au moins un équipement de sécurité respecte les exigences de sécurité établies en réponse au signal reçu, et
informer un occupant du véhicule en cas de non-respect des exigences de sécurité définies.

12. Véhicule (301) comprenant un agencement selon l'une quelconque des revendication 11.

13. Système d'analyse d'au moins un équipement de sécurité dans un véhicule, dans lequel chacun des équipements de sécurité comprend un dispositif d'identification, le système comprenant :
un module de réception (301) configuré pour recevoir un signal avec des informations associées au dispositif d'identification lors d'événements prédéterminés,
un module de détermination (303a) configuré pour déterminer l'emplacement du véhicule,
un module de réglage (303c) configuré pour régler les exigences de sécurité à respecter en réponse à l'emplacement déterminé,
un module de détermination (304) configuré pour déterminer si l'au moins un équipement de sécurité respecte les exigences de sécurité en réponse au signal reçu, et
un module d'information (305) configuré pour informer un occupant du véhicule en cas de non-respect des exigences de sécurité définies.

14. Système selon la revendication 13, le système comprenant en outre :
un module de détermination (302) configuré pour déterminer la présence et l'état de l'équipement de sécurité détecté en réponse au signal reçu.
